# EUROPÄISCHE PATENTSCHRIFT

(11) **EP 3 514 509 B1**
(45) Veröffentlichungstag und Bekanntmachung des Hinweises auf die Patenterteilung: **16.09.2020**
(21) Anmeldenummer: 18152376.2
(22) Anmeldetag: 18.01.2018
(51) Int. Cl.: G01F 25/00, F16B 1/00

(54) **ÜBERWACHUNGSSENSOR FÜR DOSIERTE PULVERMENGEN**
MONITORING SENSOR FOR DOSED QUANTITIES OF POWDER
CAPTEUR DE SURVEILLANCE POUR QUANTITÉS DE POUDRE DOSÉES

(43) Veröffentlichungstag der Anmeldung: 24.07.2019
(73) Patentinhaber: Harro Höfliger Verpackungsmaschinen GmbH, 71573 Allmersbach im Tal (DE)
(72) Erfinder: Müller, Daniel, 71573 Allmersbach im Tal (DE); Puppich, Thomas, 71573 Allmersbach im Tal (DE)
(74) Vertreter: Zurhorst, Stefan

(56) Entgegenhaltungen:
- EP-A1- 2 187 183
- US-A1- 2010 107 775
- US-A1- 2016 040 825
- US-B1- 9 845 167

## Beschreibung

Die Erfindung betrifft einen Überwachungssensor für dosierte Pulvermengen mit den Merkmalen nach dem Oberbegriff des Anspruchs 1.

Insbesondere im pharmazeutischen Bereich werden pulverartige Formulierungen eingesetzt, wobei aus einem Pulvervorrat für den jeweiligen Anwendungsfall geeignete Teilmengen präzise abgemessen bzw. dosiert werden müssen. Dies geschieht beispielsweise mittels Walzen- oder Scheibendosierern, die Dosierbohrungen mit einem kalibrierten Volumen aufweisen. Diese Dosierbohrungen werden mit dem Pulver befüllt, so dass Teilmengen mit dem Volumen der jeweiligen Dosierbohrung entstehen. Solche Teilmengen können dann ausgeblasen und der weiteren Verarbeitung, insbesondere der Abfüllung in einen Zielbehälter zugeführt werden.

Mit zunehmenden Anforderungen an die Prozesssicherheit insbesondere hinsichtlich der erreichten Zielmengen besteht ein Bedarf, die abgemessenen Pulvermengen auf Einhaltung bestimmter Mengentoleranzen zu prüfen. Hierzu werden Überwachungssensoren eingesetzt, die in einer bekannten Bauform einen Sensorgrundkörper und eine Sensorbuchse zur Durchleitung der dosierten Pulvermenge umfassen. Die dosierte Pulvermenge wird durch die Sensorbuchse hindurchgeleitet und dabei einer kapazitiven Massebestimmung unterzogen. Für ein genaues und reproduzierbares Messergebnis ist eine geometrische Anpassung der Sensorbuchse an das Format der zu prüfenden Pulvermenge erforderlich. Da aber auf der gleichen Dosiereinrichtung Pulver in verschiedenen Chargen mit unterschiedlichen Formaten verarbeitet werden, führt das Erfordernis der geometrischen Anpassung auch dazu, dass unterschiedliche Sensorbuchsen eingesetzt werden müssen.

Um nicht zahlreiche verschiedene Überwachungssensoren bereithalten zu müssen, werden Bauformen eingesetzt, bei denen die Sensorbuchsen auswechselbar im Sensorgrundkörper gehalten sind. Der Benutzer muss hierbei lediglich eine Auswahl von formatabhängig angepassten Sensorbuchsen bereithalten, während der Sensorgrundkörper einschließlich seiner Mess- und Steuerelektronik unverändert beibehalten werden kann. Bei jedem Formatwechsel beschränkt sich die Anpassungsarbeit am Überwachungssensor darauf, die vorhandene Sensorbuchse zu entnehmen und gegen eine an das zur Bearbeitung anstehende Format angepasste Sensorbuchse auszutauschen.

Hierbei treten in der Praxis verschiedene Schwierigkeiten auf. Bisher wurden die Sensorbuchsen ohne Arretierung in den Sensorgrundkörper gesteckt. Aufgrund von Vibrationen oder anderen Krafteinflüssen konnte jedoch eine axiale Verschiebung der Sensorbuchsen nicht ausgeschlossen werden. Außerdem war auch eine Rotationsbewegung der Sensorbuchsen möglich. Die genannten unerwünschten Relativbewegungen können sich negativ auf die Qualität des Messsignals auswirken und im Extremfall sogar zu einer Beschädigung des Sensors führen. Fixierungsversuche mit O-Ringen führten dazu, dass diese beim Buchsenwechsel zur Beschädigung neigten. Insgesamt ist das Herausziehen und das Einstecken der Sensorbuchsen kraftaufwendig, was das Umrüsten der in die Maschine eingebauten Überwachungssensoren bei entsprechend beengten Platzverhältnissen erschwert.

Aus der EP 2 187 183 A1 ist ein kapazitiver Flusssensor für fließende Pulvermengen mit einer rohrförmig gewickelten kapazitiven Sensorstruktur bekannt, welche auf der Innenseite mit einem Schutzrohr versehen ist. Insgesamt drei Kunststoffblöcke und zwei Überwurfmuttern sorgen für eine Austauschbarkeit des inneren Schutzrohrs. Der unterste Block ist mit dem gewickelten Sensorrohr verbunden und in einem Gehäuse unterhalb eines Ringflansches positioniert. Der zweite, mittlere Block ist mit dem inneren Schutzrohr verklebt und sitzt oben auf dem Ringflansch auf. Hierüber ist eine erste, mittlere Überwurfmutter geschraubt, in die von oben der dritte, oberste Block als Klemmblock eingeführt ist. Die gesamte Einheit ist schließlich von oben mit einer weiteren, oberen Überwurfmutter gegeneinander unter Zwischenlage des Ringflansches verspannt.

Der Erfindung liegt die Aufgabe zugrunde, einen gattungsgemäßen Überwachungssensor derart weiterzubilden, dass die Austauschbarkeit der Sensorbuchse verbessert ist.

Diese Aufgabe wird durch einen Überwachungssensor mit den Merkmalen des Anspruchs 1 gelöst.

Nach der Erfindung ist vorgesehen, dass an der auswechselbaren Sensorbuchse ein Halteblech befestigt ist, wodurch die Sensorbuchse und das Halteblech eine gemeinsam auswechselbare Einheit bilden. Außerdem weist der Sensorgrundkörper eine Anlagefläche für das Halteblech auf, während der Überwachungssensor einen Haltemagnet zum Andrücken des Halteblechs an die Anlagefläche umfasst. Dabei kann es zweckmäßig sein, dass der Haltemagnet am Halteblech befestigt ist, während der Sensorgrundkörper entsprechend magnetisch anziehbare Eigenschaften aufweist. Bevorzugt besteht jedoch das Halteblech aus einem magnetisch anziehbaren Material, während der Haltemagnet im Sensorgrundkörper positioniert ist. Jedenfalls ist durch die Erfindung erreicht, dass die Sensorbuchse lagegenau im Sensorgrundkörper fixiert wird. Die magnetische Andrückkraft verhindert zuverlässig Verschiebe- und Drehbewegungen der Sensorbuchse relativ zum Sensorgrundkörper. Dennoch kann die Magnetkraft beim Herausziehen der Buchse ohne größeren Kraftaufwand manuell überwunden werden. Ohne das Vorhandensein von Klemmungen oder dergleichen kann die jeweilige Sensorbuchse leicht entnommen oder eingesteckt werden. Die nur in unmittelbarer Nähe zur Montageposition wirkende Magnetkraft stört hierbei nicht, stellt aber gleichzeitig eine präzise Lagepositionierung in Betriebsposition sicher. Durch das deutlich vereinfachte Wechseln der Sensorbuchsen ist ein Formatwechsel problemlos durchzuführen. Die Gefahr einer Beschädigung des Sensors beim Formatwechsel ist deutlich reduziert. Durch die präzise Lagefixierung ist die Zuverlässigkeit der Messung erhöht, während gleichzeitig Folgekosten durch die im Stand der Technik bekannten Fehler und Probleme verringert sind.

In vorteilhafter Weiterbildung der Erfindung ist im Sensorgrundkörper eine Durchgangsöffnung ausgeformt, wobei die Sensorbuchse im montierten Zustand spielfrei in der Durchgangsöffnung gehalten ist. Hierdurch wird erreicht, dass die Sensorbuchse in der Ebene der Anlagefläche exakt positioniert und zentriert ist und darüber hinaus auch keine Kippbewegungen ausführen kann. Das an die Anlagefläche angepresste Halteblech stellt eine Fixierung in Axialrichtung sicher, während der exzentrisch zur Längsachse positionierte Haltemagnet eine Drehbewegung der Baueinheit aus Sensorbuchse und Halteblech um die genannte Längsachse verhindert. Alles zusammen führt zu einer Positionierung und Fixierung in allen lateralen und rotatorischen Freiheitsgraden, wobei diese einmal eingenommene Positionierung während des Betriebes zuverlässig aufrechterhalten bleibt. Dies trägt zur Konstanz und Präzision der Messergebnisse bei.

Im montierten Zustand besteht vorteilhaft eine elektrisch leitende Verbindung zwischen dem Halteblech und dem Sensorgrundkörper, demnach eine elektrische Erdung des Halteblechs gegenüber dem Sensorgrundkörper herbeigeführt wird. Hierdurch ist einerseits das Messfeld im Inneren der Sensorbuchse gegen äußere Störeinflüsse elektrisch abgeschirmt, während andererseits ein Streuen der Feldlinien des Messfeldes aus der Messstrecke heraus nach außen reduziert ist. Durch die erreichte wirkungsvolle Trennung von Messstrecke und Umgebung ist die Reproduzierbarkeit des Messergebnisses weiter verbessert.

In einem bevorzugten Aspekt weist der Überwachungssensor eine Ausblasdüse für die Sensorbuchse auf. Diese ist im Querschnitt der Sensorbuchse betrachtet zweckmäßig tangential zu einer Längsachse der Sensorbuchse ausgerichtet. Es war nämlich zu beobachten, dass sich Pulverrückstände in der Sensorbuchse ablagern können, wobei sich der Messwert des Sensors aufgrund einer durch die Pulverablagerung bedingten Änderung des Dielektrikums verändert. Die erfindungsgemäße Ausblasdüse erlaubt nun nach Bedarf oder in fest vorgegebenen Zyklen ein Ausblasen und damit eine Reinigung des Innenraums der Sensorbuchse. Die hierdurch erreichte Beseitigung von möglicherweise anhaftenden Pulverrückständen sorgt für eine Konstanthaltung der dielektrischen Parameter, wodurch korrespondierende Messfehler vermieden sind. Die außermittige, tangentiale Ausrichtung der Ausblasdüse führt zu einer schraubenförmigen Verwirbelung innerhalb der Sensorbuchse, was die Reinigungswirkung verbessert.

Ein Ausführungsbeispiel der Erfindung ist nachfolgend anhand der Zeichnung näher beschrieben. Es zeigen:
- Fig. 1: in einer schematischen Längsschnittdarstellung einen erfindungsgemäß ausgeführten Überwachungssensor mit Sensorbuchse, Halteblech, Haltemagnet und Ausblasdüse, und
- Fig. 2: in einer schematischen Draufsicht den Überwachungssensor nach Fig. 1 mit Einzelheiten zur Positionierung des Halteblechs und zur tangentialen Ausrichtung der Ausblasdüse.

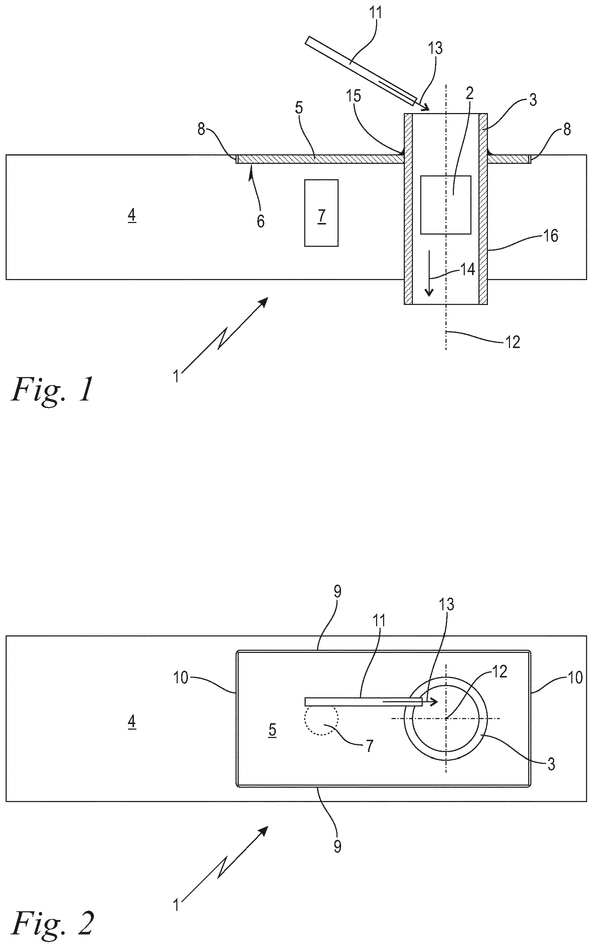

Fig. 1 zeigt in einer schematischen Längsschnittdarstellung einen erfindungsgemäß ausgeführten Überwachungssensor 1 zur Massebestimmung von hier nur schematisch angedeuteten dosierten Pulvermengen 2. Bei den hier gezeigten dosierten Pulvermengen 2 handelt es sich um zu sogenannten Pellets verdichtete pharmazeutische Pulverpfropfen, die zuvor in einem Schieberdosierer in vorbekannter und deshalb hier nicht beschriebener Weise dosiert und abgemessen worden sind. Der hier gewählte Begriff der Pulvermengen 2 umfasst jedenfalls im Rahmen der Erfindung lose, amorphe Pulvermengen und auch zu Quasi-Festkörpern verpresste Pulvermengen wie Pellets, Tabletten oder dergleichen insbesondere aus dem pharmazeutischen Bereich, aber auch aus anderen Bereichen wie beispielsweise aus dem Bereich der Nahrungsergänzungsmittel. Die Dosierung kann auch in einem Walzendosierer, in einem Scheibendosierer, mittels eines Stechhebers oder dergleichen in vorbekannter Weise erfolgen. Der Überwachungssensor 1 ist ein Sensor zur kapazitiven Massebestimmung der Pulvermenge 2 und umfasst hierfür eine Sensorbuchse 3 sowie einen Sensorgrundkörper 4. Die Sensorbuchse 3 erstreckt sich entlang einer hier beispielhaft vertikal verlaufenden Längsachse 12 und dient der Durchleitung der dosierten Pulvermenge 2 von oben nach unten entsprechend einem Pfeil 14. Der Sensorgrundkörper 4 enthält eine nicht dargestellte kapazitive Messelektronik. Es wird eine elektrische Kapazität gebildet, deren elektrisches Feld den Innenraum der Sensorbuchse 3 durchgreift. Die hindurchtretende Pulvermenge 2 führt zu einer dielektrischen Veränderung der Kapazität, welche durch den Überwachungssensor 1 erfasst und in ein Messsignal zur Massebestimmung der Pulvermenge 2 umgewandelt werden kann.

Für eine genaue und reproduzierbare Messung ist eine Anpassung des inneren Querschnitts der Sensorbuchse 3 an das Format der zu messenden Pulvermenge 2 angestrebt. Die Sensorbuchse 3 ist deshalb auswechselbar am Sensorgrundkörper 4 gehalten. Für Messungen von Pulvermengen 2 mit abweichendem Format werden abweichende, an dieses Format angepasste Sensorbuchsen 3 in den hier gezeigten Sensorgrundkörper 4 eingesetzt, nachdem die hier dargestellte Sensorbuchse 3 entnommen wurde.

Zur Erzielung der genannten Auswechselbarkeit ist an der Sensorbuchse 3 ein Halteblech 5 befestigt und bildet zusammen mit der Sensorbuchse 3 eine auswechselbare Einheit. Die mechanische Verbindung zwischen dem Halteblech 5 und der Sensorbuchse 3 ist hier durch eine schematisch angedeutete, umlaufende Klebefuge 15 gebildet. Es kann aber auch eine geschraubte oder geklemmte Verbindung oder dergleichen zweckmäßig sein. Korrespondierend zur Baueinheit aus Sensorbuchse 3 und Halteblech 5 weist der Sensorgrundkörper 4 eine Durchgangsöffnung 16 für die Sensorbuchse 3 und auch eine Anlagefläche 6 für das Halteblech 5 auf. Im gezeigten bevorzugten Ausführungsbeispiel ist die Anlagefläche 6 durch einen Boden einer Aufnahmetasche 8 gebildet, in welcher das Halteblech 5 zu liegen kommt.

Im Sensorgrundkörper 4 ist ein Haltemagnet 7 angeordnet und derart nahe zur Anlagefläche 6 positioniert, dass in der gezeigten Betriebsposition das aus einem magnetisch anziehbaren Material bestehende Halteblech 5 gegen die Anlagefläche 6 gepresst wird. Dabei kann es zweckmäßig sein, dass die entsprechende Stirnfläche des Haltemagneten 7 einen Teil der Anlagefläche 6 bildet und folglich unmittelbar in Kontakt mit dem Halteblech 5 kommt. Im gezeigten bevorzugten Ausführungsbeispiel ist der Haltemagnet 7 jedoch mit einem bestimmten Abstand zur Anlagefläche 6 positioniert, wobei die Anlagefläche 6 unterbrechungsfrei den Haltemagneten 7 überdeckt. Durch geeignete Abmessung des genannten Abstandes kann eine Anpassung der wirkenden Haltekraft herbeigeführt werden, während die geschlossene Oberfläche der Anlagefläche 6 zur mechanischen Robustheit und zur leichten Reinigbarkeit beiträgt. Alternativ zur gezeigten Anordnung kann es auch zweckmäßig sein, den Haltemagneten 7 am Halteblech 5 zu befestigen, während der Sensorgrundkörper 4 im Bereich der Anlagefläche 6 zumindest abschnittsweise durch ein magnetisch anziehbares Material gebildet ist. In jedem Fall wird eine axiale Andrückkraft erzeugt, die während des Betriebs eine dauerhafte Fixierung der Sensorbuchse 3 relativ zum Sensorgrundkörper 4 sicherstellt, während gleichzeitig eine leichte Austauschbarkeit gegeben ist.

Die Sensorbuchse 3 besteht aus einem elektromagnetisch durchlässigen, nicht leitenden Material, nämlich aus einem nicht leitenden Kunststoff, wozu im bevorzugten Ausführungsbeispiel PEEK (Polyetheretherketon) gewählt ist. Dadurch kann im Inneren der Sensorbuchse ein elektromagnetisches, hier kapazitives Messfeld aufgebaut werden. Das Halteblech 5 hingegen besteht aus einem elektrisch leitfähigen Material, und auch der Kontakt des Halteblechs 5 mit der Anlagefläche 6 ist elektrisch leitend ausgeführt. Hieraus ergibt sich eine elektrische Erdung des Halteblechs 5 gegenüber dem Sensorgrundkörper 4, in dessen Folge die im Innenraum der Sensorbuchse 3 befindliche Messstrecke für die Massebestimmung der Pulvermenge 2 gegen äußere Störeinflüsse elektrisch abgeschirmt ist.

In Fig. 1 ist noch erkennbar, dass der Überwachungssensor 1 eine schematisch angedeutete Ausblasdüse 11 für die Sensorbuchse 3 aufweist. Bei Bedarf oder in regelmäßigen Zyklen kann Druckluft oder ein anderes geeignetes Gas entsprechend einem Pfeil 13 in den Innenraum der Sensorbuchse 3 eingeblasen werden, um dort eventuell anhaftende Pulverrückstände auszublasen. Hierzu ist die Ausblasdüse 11 im Längsschnitt der Sensorbuchse 3 in einem schrägen Winkel zur Längsachse 12 geneigt, so dass die Blasrichtung gemäß dem Pfeil 13 weder parallel noch senkrecht zur Längsachse 12 liegt.

Fig. 2 zeigt in einer schematischen Draufsicht den Überwachungssensor 1 nach Fig. 1. Hier ist zunächst zu erkennen, dass die Ausblasdüse 11 im Querschnitt der Sensorbuchse 3 betrachtet außermittig, also tangential zur Längsachse 12 der Sensorbuchse ausgerichtet ist. Hieraus und aus der Zusammenschau mit Fig. 1 ergibt sich, dass sich beim Ausblasen im Innenraum der querschnittsmäßig kreisrunden Sensorbuchse 3 ein schraubenförmiger Strömungsverlauf einstellt.

Des Weiteren ergibt sich aus der Zusammenschau der Fig. 1 und 2, dass die Aufnahmetasche 8 (Fig. 1) in der Draufsicht gemäß Fig. 2 durch zwei parallel sich gegenüberliegende Umfangswände 9 sowie durch zwei im rechten Winkel dazu verlaufende, jedoch ebenfalls parallel sich gegenüberliegende Umfangswände 10 begrenzt ist. Das Halteblech 5 hat in der Ebene der Anlagefläche 6 betrachtet etwas Untermaß gegenüber der Aufnahmetasche 8, demnach also jeweils ein Spalt zwischen den Kanten des Halteblechs 5 und den Umfangswänden 9, 10 der Aufnahmetasche 8 verbleibt. Die montierte Sensorbuchse 3 hingegen sitzt spielfrei in der Durchgangsöffnung 16 des Sensorgrundkörpers 4. Dieser spielfreie Sitz hält und zentriert die Baueinheit aus Sensorbuchse 3 und Halteblech 5 in Raumrichtungen senkrecht zur Längsachse 12, also in der Ebene der Anlagefläche 6 und verhindert außerdem Kippbewegungen um in der Ebene der Anlagefläche 6 liegende Achsen. Senkrecht dazu, also in Richtung der Längsachse 12 wird die Relativpositionierung durch die Auflage des Halteblechs 5 auf der Anlagefläche 6 herbeigeführt. Die magnetische Anpresskraft des senkrecht zur Längsachse 12 sich erstreckenden Halteblechs 5 auf der Anlagefläche 6 bewirkt außerdem ein Positionieren und Festhalten der Baueinheit aus Sensorbuchse 3 und Halteblech 5 bezüglich Drehbewegungen um die Längsachse 12. Ausgehend von dieser hierdurch vorgegebenen und eingenommenen definierten Betriebsposition sind laterale Verschiebebewegungen in allen drei Raumrichtungen und auch Dreh- und Kippbewegungen um alle drei Raumachsen zuverlässig verhindert.

Bei einem Formatwechsel der zu messenden Pulvermengen 2 kann nun die Baueinheit aus Sensorbuchse 3 und Halteblech 5 koaxial zur Längsachse 12 unter Überwindung der magnetischen Haltekraft aus dem Sensorgrundkörper 4 herausgezogen werden. Umgekehrt kann nun eine andere solche Baueinheit mit an das neue Format der Pulvermenge 2 angepasstem Querschnitt der Sensorbuchse 3, jedoch mit gleicher geometrischer Ausgestaltung des Halteblechs 5 eingesetzt werden. Die wirkende Magnetkraft führt zu einer Fixierung und Quasi-Verriegelung der eingesetzten Sensorbuchse 3 in einer exakt ausgerichteten und während des Betriebs auch nicht mehr veränderbaren Relativposition zum Sensorgrundkörper 4.

## Patentansprüche

1. Überwachungssensor (1) für dosierte Pulvermengen (2), umfassend eine Sensorbuchse (3) zur Durchleitung der dosierten Pulvermenge (2) sowie einen Sensorgrundkörper (4), in dem die Sensorbuchse (3) auswechselbar gehalten ist, **dadurch gekennzeichnet, dass** an der auswechselbaren Sensorbuchse (3) ein Halteblech (5) befestigt ist, dass der Sensorgrundkörper (4) eine Anlagefläche (6) für das Halteblech (5) aufweist, und dass der Überwachungssensor (1) einen Haltemagnet (7) zum Andrücken des Halteblechs (5) auf die Anlagefläche (6) aufweist.

2. Überwachungssensor nach Anspruch 1,
**dadurch gekennzeichnet, dass** das Halteblech (5) aus einem magnetisch anziehbaren Material besteht, und dass der Haltemagnet (7) im Sensorgrundkörper (4) positioniert ist.

3. Überwachungssensor nach Anspruch 1 oder 2,
**dadurch gekennzeichnet, dass** im Sensorgrundkörper (4) eine Durchgangsöffnung (16) ausgeformt ist, wobei die Sensorbuchse (3) im montierten Zustand spielfrei in der Durchgangsöffnung (16) gehalten ist.

4. Überwachungssensor nach einem der Ansprüche 1 bis 3,
**dadurch gekennzeichnet, dass** im montierten Zustand eine elektrisch leitende Verbindung zwischen dem Halteblech (5) und dem Sensorgrundkörper (4) besteht.

5. Überwachungssensor nach einem der Ansprüche 1 bis 4,
**dadurch gekennzeichnet, dass** der Überwachungssensor (1) eine Ausblasdüse (11) für die Sensorbuchse (3) aufweist.

6. Überwachungssensor nach Anspruch 5,
**dadurch gekennzeichnet, dass** die Ausblasdüse (11) im Querschnitt der Sensorbuchse (3) betrachtet tangential zu einer Längsachse (12) der Sensorbuchse (3) ausgerichtet ist.

## Claims

1. Monitoring sensor (1) for dosed quantities of powder (2), comprising a sensor sleeve (3) for passing the dosed quantity of powder (2) through and a sensor base body (4), in which the sensor sleeve (3) is exchangeably held,
**characterised in that** a retaining plate (5) is secured to the exchangeable sensor sleeve (3), **in that** the sensor base body (4) has a contact surface (6) for the retaining plate (5), and **in that** the monitoring sensor (1) has a retaining magnet (7) for pressing the retaining plate (5) onto the contact surface (6).

2. Monitoring sensor according to claim 1,
**characterised in that** the retaining plate (5) consists of a magnetically attractable material, and **in that** the retaining magnet (7) is positioned in the sensor base body (4).

3. Monitoring sensor according to claim 1 or 2,
**characterised in that** a through-opening (16) is formed in the sensor base body (4), the sensor sleeve (3) being held in the through-opening (16) without play in the installed state.

4. Monitoring sensor according to any of claims 1 to 3,
**characterised in that** an electrically conductive connection between the retaining plate (5) and the sensor base body (4) is present in the installed state.

5. Monitoring sensor according to any of claims 1 to 4,
**characterised in that** the monitoring sensor (1) has a blow-out nozzle (11) for the sensor sleeve (3).

6. Monitoring sensor according to claim 5,
**characterised in that** the blow-out nozzle (11) is oriented tangentially to a longitudinal axis (12) of the sensor sleeve (3) as viewed in the cross-section of the sensor sleeve (3).

## Revendications

1. Capteur de surveillance (1) pour des quantités de poudre dosées (2), comprenant un manchon capteur (3) pour le passage de la quantité de poudre dosée (2) ainsi qu'un corps de base de capteur (4) dans lequel le manchon capteur (3) est retenu de manière échangeable,
**caractérisé en ce qu'**au manchon capteur (3) échangeable est fixée une tôle de retenue (5), **en ce que** le corps de base de capteur (4) comporte une surface d'application (6) pour la tôle de retenue (5), et **en ce que** le capteur de surveillance (1) comporte un aimant de retenue (7) pour presser la tôle de retenue (5) sur la surface d'application (6).

2. Capteur de surveillance selon la revendication 1,
**caractérisé en ce que** la tôle de retenue (5) se compose d'un matériau à attraction magnétique, et **en ce que** l'aimant de retenue (7) est positionné dans le corps de base de capteur (4).

3. Capteur de surveillance selon la revendication 1 ou 2,
**caractérisé en ce que** dans le corps de base de capteur (4) est ménagée une ouverture de passage (16), dans lequel le manchon capteur (3), à l'état monté, est retenu sans jeu dans l'ouverture de passage (16).

4. Capteur de surveillance selon l'une des revendications 1 à 3,
**caractérisé en ce qu'**à l'état monté, une liaison électriquement conductrice existe entre la tôle de retenue (5) et le corps de base de capteur (4).

5. Capteur de surveillance selon l'une des revendications 1 à 4,
**caractérisé en ce que** le capteur de surveillance (1) comporte un éjecteur (11) pour le manchon capteur (3).

6. Capteur de surveillance selon la revendication 5,
**caractérisé en ce que** l'éjecteur (11), considéré dans la section transversale du manchon capteur (3), est orienté tantentiellement à un axe longitudinal (12) du manchon capteur (3).
